# EUROPÄISCHE PATENTSCHRIFT

(11) **EP 4 441 397 B1**
(45) Veröffentlichungstag und Bekanntmachung des Hinweises auf die Patenterteilung: **22.10.2025**
(21) Anmeldenummer: 22823065.2
(22) Anmeldetag: 30.11.2022
(51) Int. Cl.: F16H 57/04

(54) **ÖLANSAUGUNG IN EINEM GETRIEBEGEHÄUSE EINES KRAFTFAHRZEUGS**
OIL SUCTION IN A TRANSMISSION HOUSING OF A MOTOR VEHICLE
ASPIRATION D'HUILE DANS UN CARTER DE TRANSMISSION D'UN VÉHICULE AUTOMOBILE

(30) Priorität: 02.12.2021 DE 102021213688
(43) Veröffentlichungstag der Anmeldung: 09.10.2024
(73) Patentinhaber: ZF Friedrichshafen AG, 88046 Friedrichshafen (DE)
(72) Erfinder: SCHUPP, Oliver, 88045 Friedrichshafen (DE); MORSCH CASPARI, Michel, 88045 Friedrichshafen (DE); SAUTER, Bernhard, 88069 Tettnang (DE)
(74) Vertreter: ZF Friedrichshafen AG
(86) Internationale Anmeldenummer: PCT/EP2022/083764
(87) Internationale Veröffentlichungsnummer: WO 2023/099519

(56) Entgegenhaltungen:
- DE-A1- 102004 057 221
- DE-A1- 102010 002 151
- DE-A1- 102016 203 365
- DE-A1- 19 860 381
- DE-A1- 2 701 939
- JP-A- 2005 042 929
- US-A- 2 022 898
- US-B1- 10 569 202

## Beschreibung

Die vorliegende Erfindung bezieht sich auf eine Ölansaugung in einem Getriebegehäuse eines Kraftfahrzeugs gemäß dem Oberbegriff des Patentanspruchs 1.

Aus dem Stand der Technik sind Ölansaugungen in Getriebegehäusen bekannt. Hierbei wird versucht, die Ölansaugungen so auszuführen, dass einerseits möglichst bei verschiedenen Fahrsituationen, beispielsweise beim Beschleunigen, Bremsen, bei Kurvenfahrten, bei Bergfahrten etc. sowie bei sämtlichen Betriebstemperaturen ausreichend Öl durch die vorgesehene Pumpe in dem Getriebegehäuse angesaugt werden kann. Bei derartigen Situationen kann es dazu kommen, dass das Öl aus dem Bereich der Ansaugstelle entweicht, so dass es zu einer ungewollten Luftansaugung kommt. Andererseits ist jedoch die Ölmenge so gering wie möglich zu halten, um eine Überhitzung oder einen Ölauswurf wegen eines zu hohen Ölniveaus zu vermeiden und um eine Gewichtseinsparung bei geringeren Kosten zu erzielen.

Wenn nicht ausreichend Öl angesaugt werden kann, werden durch die Ölansaugung Luftblasen angesaugt, welche zu Geräuschen und Beanstandungen führen. Die angesaugten Luftblasen können in nachteiliger Weise in einem nächsten Schritt zu Druckschwankungen führen, die wiederum in Kraftschlussproblemen bei den Schaltelementen und sogar in einer Schädigung des Getriebes resultieren können.

Aus dem Dokument US 2 022 898 A ist eine Pumpe mit mehreren Ansaugöffnungen in einem Fahrzeuggetriebegehäuse bekannt, deren Position in Abhängigkeit einer Fahrzeugbeschleunigung verstellbar ist. Ähnliche Systeme sind außerdem beispielsweise in den Dokumenten DE 10 2010 002151 A1, DE 27 01 939 A1 oder DE 10 2016 203365A1 offenbart.

Der vorliegenden Erfindung liegt die Aufgabe zu Grunde, eine Ölansaugung in einem Getriebegehäuse eines Kraftfahrzeugs vorzuschlagen, durch die stets eine optimale Ansaugposition gewährleistet wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Ölansaugung mit zumindest zwei Ansaugöffnungen in einem Getriebegehäuse eines Kraftfahrzeugs vorgeschlagen, deren Position variabel und in Abhängigkeit einer Beschleunigungsrichtung des Fahrzeugs automatisch verstellbar ist, wodurch immer die benötigte Ölmenge angesaugt werden kann.

Hierzu weist die Ölansaugung eine zwischen zwei Anschlägen und auf einem Basiselement gleitend angeordnete Scheibe auf, welche beispielsweise rund oder vieleckig ausgeführt sein kann und auf einem definierten Lochkreis eine oder mehrere Ansaugöffnungen aufweist, durch die das benötigte Öl axial strömen kann. Die Scheibe ist derart angeordnet, dass sie sich immer in die Richtung bewegt, in die sich das Öl bewegt, nämlich entgegen der Beschleunigungsrichtung, wobei durch die Bewegung der Scheibe Ansaugöffnungen an dem der Bewegungsrichtung der Scheibe zugewandten Teil der Scheibe freigegeben werden, durch die Öl angesaugt werden kann, und wobei durch die Bewegung der Scheibe Ansaugöffnungen an dem der Bewegungsrichtung der Scheibe abgewandten Teil der Scheibe verschlossen werden, um eine Luftansaugung zu vermeiden.

Gemäß einer weiteren Ausgestaltung der Erfindung weisen die Ansaugöffnungen der Ölansaugung Klappen auf, welche jeweils mit einem Fliehgewicht versehen sind, wobei sich die Fliehgewichte wie das Öl entgegen der Beschleunigungsrichtung des Fahrzeugs bewegen und dabei die Klappen derart bewegen, dass sie Ansaugöffnungen auf der ölzugewandten Seite öffnen und auf der ölabgewandten Seite verschließen. Erfindungsgemäß sind die Klappen derart angeordnet, dass sie bei nicht beschleunigtem Fahrzeug durch den Unterdruck im Ansaugsystem geöffnet werden. Gemäß einer Weiterbildung weist die Ölansaugung vier Ansaugöffnungen auf, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind.

Im Rahmen einer weiteren Ausgestaltung ist vorgesehen, dass die Ansaugöffnungen der Ölansaugung Klappen aufweisen, wobei jeweils zwei Ansaugöffnungen entgegengesetzt angeordnet sind und die Klappen mittels einer Koppelstange derart wirkverbunden sind, dass sich die Koppelstange mit den angebrachten Klappen entgegen der Fahrzeugbeschleunigung bewegt, die Klappe an der dem Öl abgewandten Seite die korrespondierende Ansaugöffnung verschließt und die Klappe an der dem Öl zugewandten Seite die korrespondierende Ansaugöffnung öffnet. Hierbei ist die Länge der Koppelstange derart gewählt, dass nie beide Klappen gleichzeitig vollständig verschlossen sind, um zu gewährleisten, dass immer ausreichend Öl angesaugt werden kann. Beispielsweise weist die Ölansaugung vier Ansaugöffnungen auf, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind.

Des Weiteren wird gemäß einer weiteren Ausgestaltung der Erfindung eine Ölansaugung vorgeschlagen, welche eine Gleitplatte aufweist, die um eine feststehende Platte in zwei Ebenen beliebig gleichzeitig verschiebbar angeordnet ist und sich entgegen der Beschleunigungsrichtung und somit in gleicher Richtung wie das Öl bewegt, wobei bei jeder Bewegung eine Ansaugöffnung geöffnet wird und eine der geöffneten Ansaugöffnung gegenüberliegende Ansaugöffnung verschlossen wird.

Gemäß einer weiteren, fünften Ausgestaltung der Erfindung ist vorgesehen, dass die Ölansaugung vier Ansaugöffnungen aufweist, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind, wobei jede Ansaugöffnung eine Klappe aufweist und wobei jede Klappe über Koppelstangen mit den zwei benachbarten Klappen wirkverbunden ist, derart, dass sich die Klappen entgegen der Fahrzeugbeschleunigung und somit in gleicher Richtung wie das Öl bewegen, wodurch die Klappen an der dem Öl abgewandten Seite die korrespondierenden Ansaugöffnungen verschließen und die Klappen an der dem Öl zugewandten Seite die korrespondierenden Ansaugöffnungen öffnen. Hierbei ist die Länge der Koppelstangen derart gewählt, dass immer mindestens eine Ansaugöffnung geöffnet ist.

Die Erfindung wird im Folgenden anhand der beigefügten Figuren beispielhaft näher erläutert, wobei lediglich die Merkmale detailliert beschrieben werden, die für die vorliegende Erfindung von Bedeutung sind und für gleiche Bauteile dieselben Bezugszeichen verwendet werden. Es zeigen:
Figur 1: Schematische Schnittansichten einer Ausgestaltung einer erfindungsgemäßen Ölansaugung;
Figur 2: Eine schematische Schnittansicht einer weiteren Ausgestaltung einer erfindungsgemäßen Ölansaugung;
Figur 3: Eine schematische Draufsicht einer weiteren Ausgestaltung einer erfindungsgemäßen Ölansaugung;
Figur 4: Eine schematische Schnittansicht einer vierten Ausgestaltung einer erfindungsgemäßen Ölansaugung;
Figur 5: Eine schematische Draufsicht der Ausgestaltung nach Figur 4; und
Figur 6: Eine schematische Draufsicht einer fünften Ausgestaltung einer erfindungsgemäßen Ölansaugung.

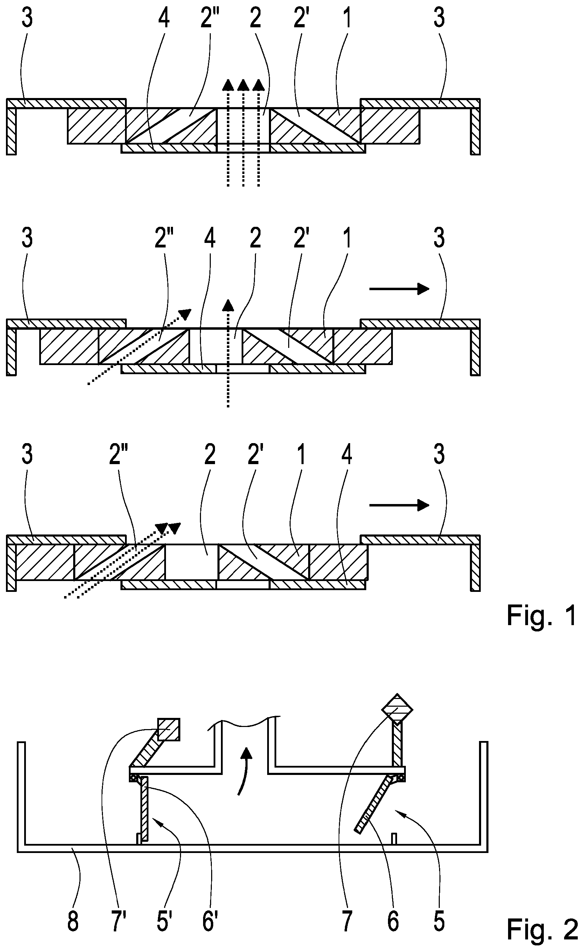

In Figur 1 ist eine erfindungsgemäße Ölansaugung dargestellt, welche eine gleitend angeordnete Scheibe 1 aufweist, welche auf einem definierten Lochkreis mehrere Ansaugöffnungen 2, 2', 2" aufweist, durch die das benötigte Öl axial strömen kann. Erfindungsgemäß ist die Scheibe 1 derart angeordnet, dass sie sich bei Beschleunigung immer in die Richtung bewegt, in die sich das Öl bewegt, nämlich entgegen der Beschleunigungsrichtung, wobei durch die Bewegung der Scheibe 1 Ansaugöffnungen an dem der Bewegungsrichtung der Scheibe zugewandten Teil der Scheibe freigegeben werden, durch die Öl angesaugt werden kann, und wobei durch die Bewegung der Scheibe Ansaugöffnungen an dem der Bewegungsrichtung der Scheibe abgewandten Teil der Scheibe verschlossen werden, um eine Luftansaugung zu vermeiden.

Dies wird anhand Figur 1 veranschaulicht: Die Scheibe 1 ist zwischen zwei Anschlägen 3 und auf einem Basiselement 4 umfassend eine Öffnung in einer Ölwanne beweglich angeordnet. Im Ruhezustand des Fahrzeugs und bezugnehmend auf den oberen Teil der Figur 1 ist die Scheibe 1 mittig zwischen den Anschlägen 3 angeordnet, so dass Öl durch die mittlere Ansaugöffnung 2 angesaugt werden kann. Im Fall einer moderaten Beschleunigung des Fahrzeugs nach rechts, die durch den Pfeil angedeutet ist, bewegt sich die Scheibe 1 um eine vom Beschleunigungsbetrag abhängige Strecke in die entgegengesetzte Richtung, wodurch die mittlere Ansaugöffnung 2 teilweise verschlossen wird und die linke Ansaugöffnung 2" teilweise geöffnet wird. Bei einer höheren Beschleunigung bewegt sich die Scheibe 1 bis zum linken Anschlag 3, wodurch die mittlere Ansaugöffnung 2 verschlossen wird und die linke Ansaugöffnung 2"geöffnet wird.

Gegenstand der Figur 2 ist ein Ausführungsbeispiel, bei dem die Ansaugöffnungen 5, 5' der in einer Ölwanne 8 angeordneten Ölansaugung Klappen 6, 6' aufweisen, welche jeweils mit einem Fliehgewicht 7, 7' versehen sind. Hierbei bewegen sich die Fliehgewichte 7, 7' wie das Öl in der Ölwanne 8 entgegen der Beschleunigungsrichtung des Fahrzeugs und bewegen die Klappen dabei derart, dass sie Ansaugöffnungen auf der ölzugewandten Seite öffnen und auf der ölabgewandten Seite verschließen.

Erfindungsgemäß sind die Klappen 6, 6' derart angeordnet, dass sie bei nicht beschleunigtem Fahrzeug durch den Unterdruck im Ansaugsystem geöffnet werden.

Bei dem gezeigten Beispiel weist die Ölansaugung zwei Ansaugöffnungen auf, die sich gegenüberstehen und auf einer Längsbeschleunigungsachse oder einer Querbeschleunigungsachse des Fahrzeugs angeordnet sind. Die Ölansaugung kann gemäß einer Weiterbildung vier Ansaugöffnungen aufweisen, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind.

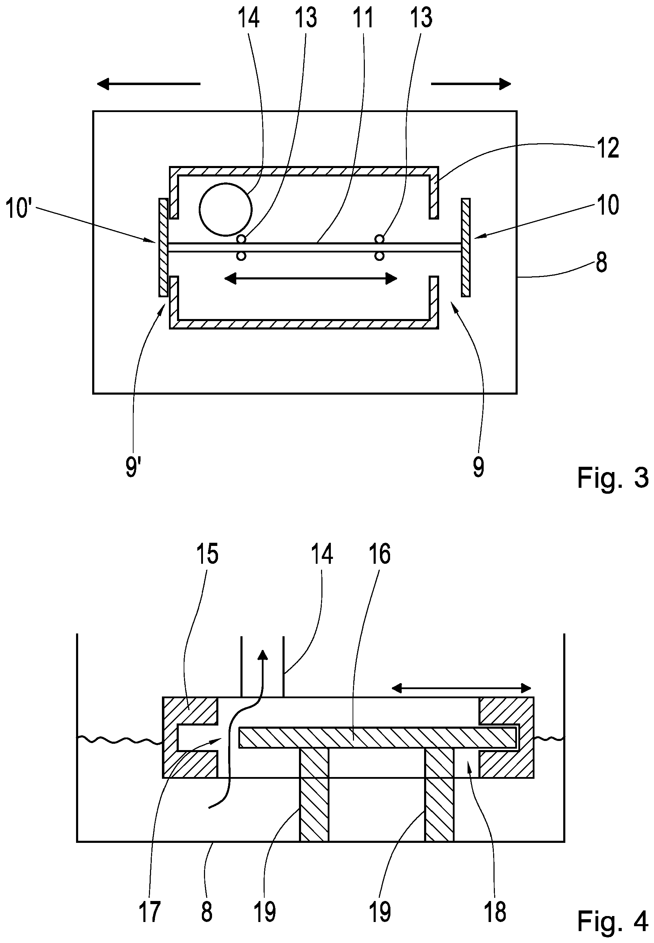

Gemäß einer weiteren Ausgestaltung und bezugnehmend auf Figur 3, weisen die Ansaugöffnungen 9, 9' der in einer Ölwanne 8 angeordneten Ölansaugung Klappen 10, 10' auf, wobei jeweils zwei Ansaugöffnungen entgegengesetzt angeordnet sind und die Klappen 10, 10' mittels einer Koppelstange 11 derart wirkverbunden sind, dass sich die Koppelstange 11 mit den angebrachten Klappen 10, 10' entgegen der Fahrzeugbeschleunigung bewegt, die Klappe an der dem Öl abgewandten Seite die korrespondierende Ansaugöffnung verschließt und die Klappe an der dem Öl zugewandten Seite die korrespondierende Ansaugöffnung öffnet. In Figur 3 ist mit 12 ein Ölfiltergehäuse bezeichnet, wobei Führungselemente für die Koppelstange 11 mit dem Bezugszeichen 13 und ein Ansaugrohr der Ölpumpe mit dem Bezugszeichen 14 bezeichnet sind.

Die Länge der Koppelstange 11 ist derart gewählt, dass nie beide mit der Koppelstange 11 verbundene Klappen 10, 10' gleichzeitig vollständig verschlossen sind, wodurch gewährleistet wird, dass immer ausreichend Öl angesaugt werden kann. Diese Ausgestaltung resultiert zudem in dem Vorteil, dass die Ansaugöffnungen 9, 9' sehr weit auseinander angeordnet sein können.

Bei dem in Figur 3 gezeigten Beispiel weist die Ölansaugung zwei Ansaugöffnungen auf, die sich gegenüberstehen und auf einer Längsbeschleunigungsachse oder einer Querbeschleunigungsachse des Fahrzeugs angeordnet sind. Gemäß einer vorteilhaften Weiterbildung weist die Ölansaugung vier Ansaugöffnungen auf, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind.

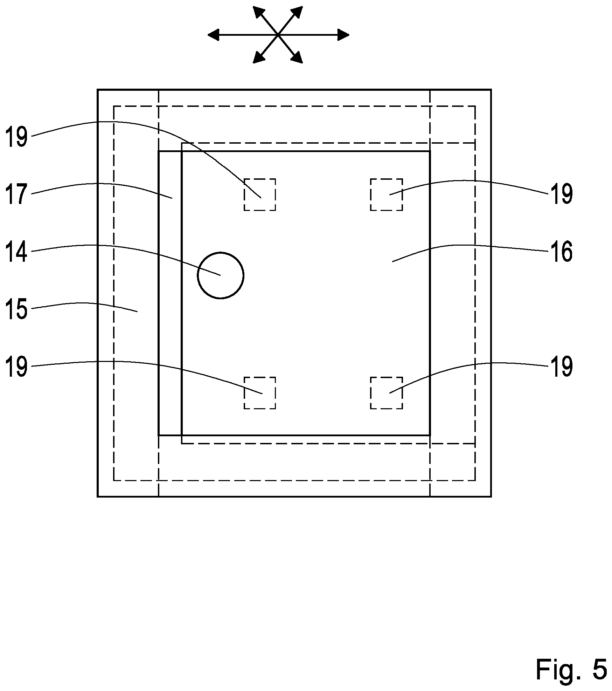

In Figuren 4 und 5 ist eine weitere Ausgestaltung einer erfindungsgemäß ausgeführten Ölansaugung dargestellt. Die Ölansaugung weist eine Gleitplatte 15 auf, die um eine feststehende Platte 16 in zwei Ebenen beliebig gleichzeitig verschiebbar angeordnet ist und sich entgegen der Beschleunigungsrichtung und somit in gleicher Richtung wie das Öl bewegt. Die feststehende Platte 16 ist mittels Befestigungselementen 19 in der Ölwanne 8 befestigt. Die Gleitplatte 15 und die feststehende Platte 16 sind derart dimensioniert, dass bei jeder Bewegung der Gleitplatte 15 zumindest eine Ansaugöffnung an der dem Öl zugewandten Seite geöffnet und zumindest eine der zumindest einen geöffneten Ansaugöffnung gegenüberliegende Ansaugöffnung verschlossen wird. Bei dem gezeigten Beispiel beschleunigt das Fahrzeug nach rechts, so dass sich das Öl und die Gleitplatte 15 nach links bewegen, wodurch eine Ansaugöffnung 17 an der dem Öl zugewandten Seite geöffnet wird, wobei gleichzeitig eine der geöffneten Ansaugöffnung 17 gegenüberliegende Ansaugöffnung 18 verschlossen wird. Durch diese Ausgestaltung wird eine einfache Bauweise und die Ansaugung des Öls an der niedrigsten Stelle der Ölwanne ermöglicht.

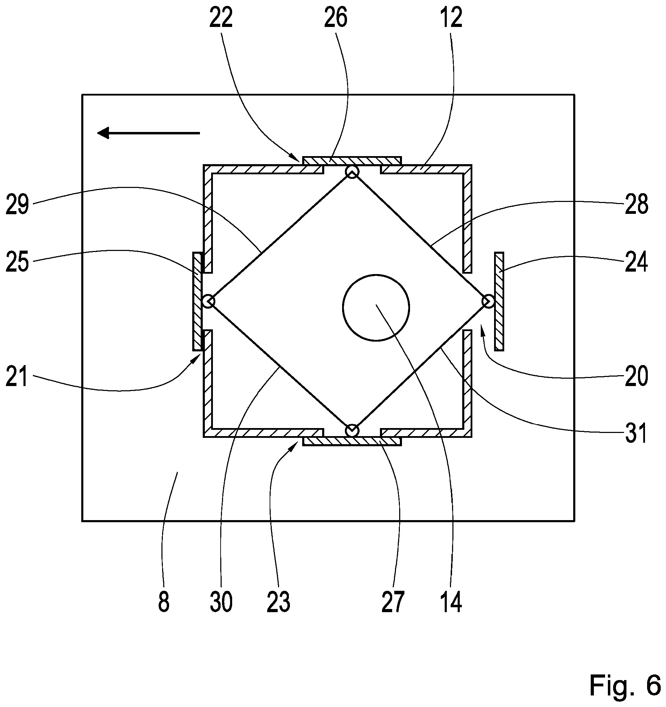

Eine weitere Ausgestaltung der Erfindung ist Gegenstand der Figur 6. Hierbei weist die Ölansaugung vier Ansaugöffnungen 20, 21, 22, 23 auf, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind.

Ferner weist jede Ansaugöffnung 20, 21, 22, 23 eine Klappe 24, 25, 26, 27 auf wobei jede Klappe 24, 25, 26, 27 über Koppelstangen 28, 29, 30, 31 mit den zwei benachbarten Klappen wirkverbunden ist, derart, dass sich die Klappen 24, 25, 26, 27 entgegen der Fahrzeugbeschleunigung und somit in gleicher Richtung wie das Öl bewegen, wodurch die Klappen 24, 25, 26, 27 an der dem Öl abgewandten Seite die korrespondierenden Ansaugöffnungen verschließen und die Klappen an der dem Öl zugewandten Seite die korrespondierenden Ansaugöffnungen öffnen. Hierbei ist die Länge der Koppelstangen 28, 29, 30, 31 derart gewählt, dass immer mindestens eine Ansaugöffnung 20, 21, 22, 23 geöffnet ist. Die mit den Klappen verbundenen Koppelstangen sind jeweils gelenkig miteinander verbunden.

Bei dem in Figur 6 gezeigten Beispiel beschleunigt das Fahrzeug entlang der Längsachse nach links, wodurch sich das Öl nach rechts bewegt und eine Ansaugöffnung 20 durch Bewegung der Klappe 24 an der dem Öl zugewandten Seite geöffnet wird. Durch diese Ausgestaltung wird eine einfache Bauweise mit geringem Bauraumbedarf ermöglicht, wobei alle Beschleunigungsrichtungen und deren Kombinationen abgedeckt werden.

### Bezugszeichen

- 1: Scheibe
- 2: Ansaugöffnung
- 2': Ansaugöffnung
- 2": Ansaugöffnung
- 3: Anschlag
- 4: Basiselement
- 5: Ansaugöffnung
- 5': Ansaugöffnung
- 6: Klappe
- 6': Klappe
- 7: Fliehgewicht
- 7': Fliehgewicht
- 8: Ölwanne
- 9: Ansaugöffnung
- 9': Ansaugöffnung
- 10: Klappe
- 10': Klappe
- 11: Koppelstange
- 12: Ölfiltergehäuse
- 13: Führungselement
- 14: Ansaugrohr
- 15: Gleitplatte
- 16: feststehende Platte
- 17: Ansaugöffnung
- 18: Ansaugöffnung
- 19: Befestigungselement
- 20: Ansaugöffnung
- 21: Ansaugöffnung
- 22: Ansaugöffnung
- 23: Ansaugöffnung
- 24: Klappe
- 25: Klappe
- 26: Klappe
- 27: Klappe
- 28: Koppelstange
- 29: Koppelstange
- 30: Koppelstange
- 31: Koppelstange

## Patentansprüche

1. Getriebegehäuse eines Kraftfahrzeugs mit einer Ölansaugung mit zumindest zwei Ansaugöffnungen in einem, wobei deren Position variabel und in Abhängigkeit einer Beschleunigungsrichtung des Fahrzeugs automatisch verstellbar ist, **dadurch gekennzeichnet, dass** die Ölansaugung eine zwischen zwei Anschlägen ( (3) und auf einem Basiselement ( (4) gleitend angeordnete Scheibe (1) aufweist, welche auf einem definierten Lochkreis mehrere Ansaugöffnungen (2, 2', 2") aufweist, durch die das benötigte Öl axial strömen kann, wobei die Scheibe (1) derart angeordnet ist, dass sie sich bei Beschleunigung immer in die Richtung bewegt, in die sich das Öl bewegt, wobei durch die Bewegung der Scheibe (1) Ansaugöffnungen an dem der Bewegungsrichtung der Scheibe (1) zugewandten Teil der Scheibe (1) freigegeben werden, durch die Öl angesaugt werden kann, und wobei durch die Bewegung der Scheibe (1) Ansaugöffnungen an dem der Bewegungsrichtung der Scheibe (1) abgewandten Teil der Scheibe (1) verschlossen werden, um eine Luftansaugung zu vermeiden.

2. Getriebegehäuse nach Anspruch 1, **dadurch gekennzeichnet, dass** die Ölansaugung zumindest zwei Ansaugöffnungen (5, 5') aufweist, welche Klappen (6, 6') aufweisen, welche jeweils mit einem Fliehgewicht (7, 7') versehen sind, wobei sich die Fliehgewichte (7, 7') wie das Öl entgegen der Beschleunigungsrichtung des Fahrzeugs bewegen und dabei die Klappen (6, 6') derart bewegen, dass sie Ansaugöffnungen auf der ölzugewandten Seite öffnen und auf der ölabgewandten Seite verschließen, wobei die Klappen (6, 6') derart angeordnet sind, dass sie bei nicht beschleunigtem Fahrzeug durch den Unterdruck im Ansaugsystem geöffnet werden.

3. Getriebegehäuse nach Anspruch 1, **dadurch gekennzeichnet, dass** die Ansaugöffnungen (9, 9') der Ölansaugung Klappen (10, 10') aufweisen, wobei jeweils zwei Ansaugöffnungen (9, 9') entgegengesetzt angeordnet sind und die Klappen (10, 10') mittels einer Koppelstange (11) derart wirkverbunden sind, dass sich die Koppelstange (11) mit den angebrachten Klappen (10, 10') entgegen der Fahrzeugbeschleunigung bewegt, eine Klappe an der dem Öl abgewandten Seite die korrespondierende Ansaugöffnung verschließt und eine Klappe an der dem Öl zugewandten Seite die korrespondierende Ansaugöffnung öffnet, wobei die Länge der Koppelstange (11) derart gewählt ist, dass nie beide mit einer Koppelstange verbundenen Klappen gleichzeitig vollständig verschlossen sind.

4. Getriebegehäuse nach Anspruch 2 oder 3, **dadurch gekennzeichnet, dass** die Ölansaugung zwei Ansaugöffnungen aufweist, die sich gegenüberstehen und auf einer Längsbeschleunigungsachse oder einer Querbeschleunigungsachse des Fahrzeugs angeordnet sind oder dass sie vier Ansaugöffnungen aufweist, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind.

5. Getriebegehäuse nach Anspruch 1, **dadurch gekennzeichnet, dass** die Ölansaugung vier Ansaugöffnungen (20, 21, 22, 23) aufweist, wobei sich jeweils zwei Ansaugöffnungen gegenüberstehen, wobei zwei sich gegenüberstehende Ansaugöffnungen auf einer Längsbeschleunigungsachse und die zwei weiteren sich gegenüberstehenden Ansaugöffnungen auf einer Querbeschleunigungsachse des Fahrzeugs angeordnet sind, wobei jede Ansaugöffnung (20, 21, 22, 23) eine Klappe (24, 25, 26, 27) aufweist, wobei jede Klappe (24, 25, 26, 27) über Koppelstangen (28, 29, 30, 31) mit den zwei benachbarten Klappen wirkverbunden ist, derart, dass sich die Klappen (24, 25, 26, 27) entgegen der Fahrzeugbeschleunigung und somit in gleicher Richtung wie das Öl bewegen, wodurch die Klappen (24, 25, 26, 27) an der dem Öl abgewandten Seite die korrespondierenden Ansaugöffnungen verschließen und die Klappen an der dem Öl zugewandten Seite die korrespondierenden Ansaugöffnungen öffnen, wobei die Länge der Koppelstangen (28, 29, 30, 31) derart gewählt ist, dass immer mindestens eine Ansaugöffnung geöffnet ist.

6. Getriebegehäuse nach Anspruch 1, **dadurch gekennzeichnet, dass** die Ölansaugung eine Gleitplatte (15) aufweist, welche um eine feststehende Platte (16) in zwei Ebenen beliebig gleichzeitig verschiebbar angeordnet ist und sich entgegen der Beschleunigungsrichtung und somit in gleicher Richtung wie das Öl bewegt, wobei die Gleitplatte (15) und die feststehende Platte (16) derart dimensioniert sind, dass bei jeder Bewegung der Gleitplatte (15) zumindest eine Ansaugöffnung an der dem Öl zugewandten Seite geöffnet und zumindest eine der zumindest einen geöffneten Ansaugöffnung gegenüberliegende Ansaugöffnung verschlossen wird.

## Claims

1. Transmission housing of a motor vehicle having an oil intake device with at least two intake openings in a, wherein the position thereof is variable and automatically adjustable as a function of an acceleration direction of the vehicle, **characterized in that** the oil intake device has a disc (1), which is arranged so as to slide on a base element (4) between two stops (3) and has, on a defined hole circle, a plurality of intake openings (2, 2', 2") through which the required oil can flow axially, wherein the disc (1) is arranged in such a manner that, during acceleration, it always moves in the direction in which the oil moves, wherein, as a result of the movement of the disc (1), intake openings that are on the part of the disc (1) facing towards the movement direction of the disc (1) and through which oil can be taken in are opened up, and wherein, as a result of the movement of the disc (1), intake openings that are on that part of the disc (1) facing away from the movement direction of the disc (1) are closed in order to avoid air being taken in.

2. Transmission housing according to Claim 1, **characterized in that** the oil intake device has at least two intake openings (5, 5'), which have flaps (6, 6'), which are each provided with a centrifugal weight (7, 7'), wherein the centrifugal weights (7, 7'), like the oil, move counter to the acceleration direction of the vehicle and in the process move the flaps (6, 6') in such a manner that they open intake openings on the side facing towards the oil and close them on the side facing away from the oil, wherein the flaps (6, 6') are arranged in such a manner that they are opened by the negative pressure in the intake system when the vehicle is not accelerating.

3. Transmission housing according to Claim 1, **characterized in that** the intake openings (9, 9') of the oil intake device have flaps (10, 10'), wherein in each case two intake openings (9, 9') are arranged opposite one another and the flaps (10, 10') are operatively connected by means of a coupling rod (11) in such a manner that the coupling rod (11) with the attached flaps (10, 10') moves counter to the vehicle acceleration, a flap on the side facing away from the oil closes the corresponding intake opening and a flap on the side facing towards the oil opens the corresponding intake opening, wherein the length of the coupling rod (11) is selected in such a manner that it is never the case that both flaps connected to a coupling rod are completely closed at the same time.

4. Transmission housing according to Claim 2 or 3, **characterized in that** the oil intake device has two intake openings, which are situated on opposite sides and are arranged on a longitudinal acceleration axis or a transverse acceleration axis of the vehicle, or **in that** it has four intake openings, wherein in each case two intake openings are situated on opposite sides, wherein two intake openings situated on opposite sides are arranged on a longitudinal acceleration axis and the other two intake openings situated on opposite sides are arranged on a transverse acceleration axis of the vehicle.

5. Transmission housing according to Claim 1, **characterized in that** the oil intake device has four intake openings (20, 21, 22, 23), wherein in each case two intake openings are situated on opposite sides, wherein two intake openings situated on opposite sides are arranged on a longitudinal acceleration axis and the other two intake openings situated on opposite sides are arranged on a transverse acceleration axis of the vehicle, wherein each intake opening (20, 21, 22, 23) has a flap (24, 25, 26, 27), wherein each flap (24, 25, 26, 27) is operatively connected by means of coupling rods (28, 29, 30, 31) to the two adjacent flaps in such a manner that the flaps (24, 25, 26, 27) move counter to the vehicle acceleration and thus in the same direction as the oil, as a result of which the flaps (24, 25, 26, 27) on the side facing away from the oil close the corresponding intake openings and the flaps on the side facing towards the oil open the corresponding intake openings, wherein the length of the coupling rods (28, 29, 30, 31) is selected in such a manner that there is always at least one intake opening open.

6. Transmission housing according to Claim 1, **characterized in that** the oil intake device has a sliding plate (15), which is arranged so as to be displaceable, in two planes simultaneously as desired, around a fixed plate (16) and moves counter to the acceleration direction and thus in the same direction as the oil, wherein the sliding plate (15) and the fixed plate (16) are dimensioned in such a manner that, during each movement of the sliding plate (15), at least one intake opening on the side facing towards the oil is opened and at least one intake opening on the opposite side to the at least one opened intake opening is closed.

## Revendications

1. Carter de transmission d'un véhicule automobile comprenant une aspiration d'huile pourvue d'au moins deux ouvertures d'aspiration dans un, dont la position est réglable de manière variable et automatique en fonction d'une direction d'accélération du véhicule, **caractérisé en ce que** l'aspiration d'huile comprend un disque (1) disposé de manière coulissante entre deux butées (3) et sur un élément de base (4), lequel est pourvu de plusieurs ouvertures d'aspiration (2, 2', 2") sur un cercle de trous défini, par lesquelles l'huile requise peut s'écouler axialement, le disque (1) étant disposé de telle sorte qu'il se déplace toujours dans la direction dans laquelle l'huile se déplace en cas d'accélération, des ouvertures d'aspiration sur la partie du disque (1) tournée dans la direction de mouvement du disque (1) étant libérées par le mouvement du disque (1), par lesquelles de l'huile peut être aspirée, et des ouvertures d'aspiration sur la partie du disque (1) tournée à l'opposé de la direction de mouvement du disque (1) étant obturées par le mouvement du disque (1) afin d'éviter une aspiration d'air.

2. Carter de transmission selon la revendication 1, **caractérisé en ce que** l'aspiration d'huile comprend au moins deux ouvertures d'aspiration (5, 5') qui sont pourvues de clapets (6, 6'), lesquels sont respectivement pourvus d'une masselotte centrifuge (7, 7'), les masselottes centrifuges (7, 7') se déplaçant comme l'huile en sens opposé à la direction d'accélération du véhicule et déplaçant ainsi les clapets (6, 6') de telle sorte qu'ils ouvrent les ouvertures d'aspiration du côté tourné vers l'huile et les obturent du côté opposé à l'huile, les clapets (6, 6') étant disposés de telle sorte qu'ils soient ouverts par la dépression dans le système d'aspiration lorsque le véhicule n'accélère pas.

3. Carter de transmission selon la revendication 1, **caractérisé en ce que** les ouvertures d'aspiration (9, 9') de l'aspiration d'huile présentent des clapets (10, 10'), respectivement deux ouvertures d'aspiration (9, 9') étant disposées de manière opposée et les clapets (10, 10') étant reliés de manière fonctionnelle par une tige de liaison (11) de telle sorte que la tige de liaison (11) et les clapets (10, 10') qui y sont fixés se déplacent en sens opposé à l'accélération du véhicule, un clapet du côté opposé à l'huile obturant l'ouverture d'aspiration correspondante et un clapet du côté tourné vers l'huile ouvrant l'ouverture d'aspiration correspondante, la longueur de la tige de liaison (11) étant choisie de telle sorte que les deux clapets reliés par une tige de liaison ne soient jamais complètement obturés simultanément.

4. Carter de transmission selon la revendication 2 ou 3, **caractérisé en ce que** l'aspiration d'huile présente deux ouvertures d'aspiration qui se font face et qui sont disposées sur un axe d'accélération longitudinale ou un axe d'accélération transversale du véhicule, ou **en ce qu'**elle présente quatre ouvertures d'aspiration, respectivement deux ouvertures d'aspiration se faisant face, deux ouvertures d'aspiration qui se font face étant disposées sur un axe d'accélération longitudinale et les deux autres ouvertures d'aspiration qui se font face étant disposées sur un axe d'accélération transversale du véhicule.

5. Carter de transmission selon la revendication 1, **caractérisé en ce que** l'aspiration d'huile présente quatre ouvertures d'aspiration (20, 21, 22, 23), respectivement deux ouvertures d'aspiration se faisant face, deux ouvertures d'aspiration qui se font face étant disposées sur un axe d'accélération longitudinale et les deux autres ouvertures d'aspiration qui se font face étant disposées sur un axe d'accélération transversale du véhicule, chaque ouverture d'aspiration (20, 21, 22, 23) comportant un clapet (24, 25, 26, 27), chaque clapet (24, 25, 26, 27) étant fonctionnellement relié, par l'intermédiaire de tiges de liaison (28, 29, 30, 31), aux deux clapets adjacents, de telle sorte que les clapets (24, 25, 26, 27) se déplacent en sens opposé à l'accélération du véhicule et donc dans la même direction que l'huile, ce qui a pour effet que les clapets (24, 25, 26, 27) du côté opposé à l'huile obturent les ouvertures d'aspiration correspondantes et que les clapets du côté tourné vers l'huile ouvrent les ouvertures d'aspiration correspondantes, la longueur des tiges de liaison (28, 29, 30, 31) étant choisie de telle sorte qu'au moins une ouverture d'aspiration soit toujours ouverte.

6. Carter de transmission selon la revendication 1, **caractérisé en ce que** l'aspiration d'huile présente une plaque coulissante (15), laquelle est disposée afin de pouvoir être déplacée de manière quelconque et simultanée dans deux plans autour d'une plaque fixe (16) et se déplace en sens opposé à la direction d'accélération et donc dans la même direction que l'huile, la plaque coulissante (15) et la plaque fixe (16) étant dimensionnées de telle sorte que, lors de chaque mouvement de la plaque coulissante (15), au moins une ouverture d'aspiration du côté tourné vers l'huile soit ouverte et au moins une ouverture d'aspiration opposée à ladite au moins une ouverture d'aspiration ouverte soit obturée.
